# EUROPÄISCHE PATENTSCHRIFT

(11) **EP 1 407 861 B1**
(45) Veröffentlichungstag und Bekanntmachung des Hinweises auf die Patenterteilung: **23.04.2008**
(21) Anmeldenummer: 03020310.3
(22) Anmeldetag: 09.09.2003
(51) Int. Cl.: B25J 15/00, G01N 35/00

(54) **Greiferwerkzeug, Dosierwerkzeug und Werkzeughalter für einen Laborautomaten**
Gripping tool, dosing tool and tool holder for laboratory analyzer
Outil de préhension, outil de dosage et support d'outil pour automate de laboratoire

(30) Priorität: 12.10.2002 DE 10247731
(43) Veröffentlichungstag der Anmeldung: 14.04.2004
(73) Patentinhaber: EPPENDORF AG, 22339 Hamburg (DE)
(72) Erfinder: Meinicke, Matthias, Dipl.-Ing., 22851 Norderstedt (DE); Wilmer, Jens, 22926 Ahrensburg (DE)
(74) Vertreter: Hauck Patent- und Rechtsanwälte

(56) Entgegenhaltungen:
- EP-A- 0 882 500
- EP-A- 1 174 535
- WO-A-00/08472
- WO-A-02/29419
- FR-A- 2 699 676
- JP-A- 59 102 591
- US-A- 5 906 795
- PATENT ABSTRACTS OF JAPAN Bd. 1996, Nr. 09, 30. September 1996 (1996-09-30) & JP 08 126952 A (SHIN MEIWA IND CO LTD), 21. Mai 1996 (1996-05-21)

## Beschreibung

Die Erfindung bezieht sich auf ein Greifwerkzeug, ein Dosierwerkzeug und auf einen Werkzeughalter für Laborautomaten.

Laborautomaten dienen der automatischen Bearbeitung von zumeist flüssigen Proben im Labor. Zu den Bearbeitungen gehören insbesondere das Temperieren, Mischen, Filtrieren, chemische Umsetzen und Dosieren der Proben. Bei bzw. zwischen den Bearbeitungen werden die Proben in Gefäßen gespeichert, insbesondere in Laborgefäßen, Gefäßketten,Mikrotiterplatten, Filterplatten und anderen Platten mit einer Vielzahl Probenaufnahmen. Die Gefäße sind zwischen bzw. in verschiedenen Lager- und Bearbeitungspositionen zu transportieren bzw. zu bewegen. Hierfür sind herkömmliche Laborautomaten mit einem Greifautomaten ausgestattet, der ein Greifen, Transportieren, Bewegen und Absetzen der Gefäße sowie ein Abdecken der Gefäße mit speziellen Deckeln ermöglicht.

Ferner weisen herkömmliche Laborautomaten eine Dosiereinrichtung auf. Bereits bekannt sind Dosiereinrichtungen, die einen Werkzeughalter und ein damit lösbar verbindbares Dosierwerkzeug mit mindestens einer KolbenZylindereinheit umfassen. Durch Verschieben des Kolbens in entgegengesetzten Richtungen wird Probeflüssigkeit durch eine Dösieröffnung angesaugt bzw. abgegeben. Bei Direktverdrängern hat der Kolben Kontakt zur Flüssigkeit und bei Luftpolstersystemen ist zwischen Kolben und Flüssigkeit ein Luftpolster vorhanden. Vielfach wird die Flüssigkeit in austauschbaren Pipettenspitzen aufgenommen, die unten eine Dosieröffnung und oben eine Aufstecköffnung zum lösbaren Verbinden mit dem Dosierwerkzeug aufweisen. Durch Austausch des Dosierwerkzeuges ist es möglich, verschiedene Dosieraufgaben auszuführen. Der Werkzeughalter ist zwischen verschiedenen Positionen verfahrbar, um Dosierwerkzeuge, Pipettenspitzen bzw. Proben aufzunehmen bzw. abzugeben

Die US-A 5,906,795 offenbart in Fig. 23 und Spalte 17, Zeile 54 bis Spalte 18, Zeile 18 ein Pipettiergerät mit einer Greifvorrichtung, die Arme zum Greifen eines Reaktionsbehälters aufweist. Die Greifvorrichtung ist anstatt eines Pipettierkopfes entfernbar am Ausgang einer Antriebseinrichtung angeordnet. Der Ausgang der Antriebsvorrichtung ist mit einem Antriebskolben versehen, der hin und her bewegbar ist, um die Ansaug- und Abgabeschritte des Pipettierkopfes zu steuern. Die Greifvorrichtung ist an einem Kopfabschnitt entsprechend den Pipettierkopf lösbar mittels Klemmbacken gehalten. Der Kolben des Pipettiergerätes steuert die Bewegung der Greifarme.

Die FR 269 99 676 A1 beschreibt insbesondere auf den Seiten 15 bis 18 und in den Abbildungen ein Dosierwerkzeug an einem Dosierautomaten, das eine Drehbewegung eines Antriebsmotors in eine Axialbewegung eines Kolbens umwandelt. Die Vorrichtung ermöglicht keinen einfachen Austausch des Dosierwerkzeuges.

Davon ausgehend liegt der Erfindung die Aufgabe zugrunde, eine vereinfachte Greif- und Dosiertechnik für Laborautomaten zur Verfügung zu stellen.

Die Aufgabe wird durch ein Greifwerkzeug mit den Merkmalen des Anspruches 1 gelöst. Ferner wird die Aufgabe durch ein Dosierwerkzeug mit den Merkmalen des Anspruches 17 gelöst. Ferner wird die Aufgabe durch einen Werkzeughalter mit den Merkmalen des Anspruches 26 gelöst. Vorteilhafte Ausgestaltungen der Erfindung sind in den Unteransprüchen angegeben.

Das erfindungsgemäße Greifwerkzeug für Laborautomaten zum automatischen Bearbeiten von Proben im Labor hat
- Greifeinrichtungen zum Greifen von Gefäßen,
- eine Einrichtung zum Wandeln und/oder Übertragen von Drehbewegungen, deren Abtrieb mit den Greifeinrichtungen gekoppelt ist, um diese anzutreiben,
- eine Kupplungseinrichtung zum lösbaren Verbinden mit einer Dreh-Antriebseinrichtung eines Werkzeughalters eines Laborautomaten, die mit dem Antrieb der Einrichtung zum Wandeln und/oder Übertragen gekoppelt ist, um diese anzutreiben, und
- eine Befestigungseinrichtung zum lösbaren Befestigen des Greifwerkzeuges am Werkzeughalter des Laborautomaten bei mit der Antriebseinrichtung des Werkzeughalters verbundener Kupplungseinrichtung.

Herkömmliche Werkzeughalter von Laborautomaten sind mit erfindungsgemäßen Greifwerkzeugen für die Handhabung von Laborgefäßen, Deckeln von Gefäßen und anderen Gegenständen einsetzbar. An einem Werkzeugs halter sind verschiedene Greifwerkzeuge für unterschiedliche Greifaufgaben montierbar. Darüber hinaus ist es möglich, denselben Werkzeughalter mit verschiedenen Dosierwerkzeugen zu bestücken, um diesen für Dosierzwecke einzusetzen. Dabei ist die Antriebseinrichtung des Werkzeughalters sowohl für die Betätigung verschiedener Greifeinrichtungen als auch für die Betätigung verschiedener Dosiereinrichtungen nutzbar. Eine Verlagerungseinrichtung zum Verlagern des Werkzeughalters entlang und/oder um mindestens eine Raumachse ist sowohl für das Verlagern des Greifwerkzeuges als auch für das Verlagern des Dosierwerkzeuges nutzbar. Es kann auf herkömmliche Werkzeughalter zurückgegriffen werden, die bereits mit entsprechenden Antriebseinrichtungen ausgestattet sind. Die erfindungsgemäßen Greifeinrichtungen ermöglichen so eine erhebliche Kostenersparnis, da sie keine eigene Antriebseinrichtung benötigen, sondern mit einem allgemein einsetzbaren Werkzeughalter zusammenarbeiten.

Die Greifeinrichtungen können unterschiedlich ausgeführt sein. So kann es sich bei den Greifeinrichtungen beispielsweise um parallel zusammen- bzw. auseinanderfahrbare Arme handeln. Gemäß einer Ausgestaltung sind die Greifeinrichtungen schwenkbar gelagerte Greifhebel. Diese können um parallele Achsen zusammen- bzw. auseinanderschwenkbar sein. Gemäß einer Ausgestaltung sind die Greifarme austauschbar, um das Greifwerkzeug an verschiedene Einsatzzwecke anzupassen.

Gemäß einer Ausgestaltung weisen die Greifhebel etwa parallele Greifarme und abgewinkelte, aufeinander zu gerichtete Antriebsarme auf, mit deren benachbarten Enden der Abtrieb der Einrichtung zum Wandeln und/oder Übertragen gekoppelt ist. Dies ermöglicht eine einfache Übertragung der Bewegung vom Abtrieb auf die Greifeinrichtungen. Durch Betätigen der Antriebsarme werden die Greifarme zusammen- bzw. auseinandergeschwenkt.

Zum sicheren Ergreifen von Gefäßen weisen gemäß einer Ausgestaltung die Greifeinrichtungen aufeinander zu gerichtete Nadeln und/oder Buchsen zum Einstechen in Wände und/oder Ergreifen an Oberflächenstrukturen der Wände von Gefäßen auf. Durch Einstechen der Nadeln in Gefäße aus Kunststoff (z.B. Polycarbonat oder Polypropylen) ist es möglich, diese sicher zu ergreifen. Die Gefäße oder andere Gegenstände werden durch Kraftschluß sicher gegriffen und eine unerwünschte Kraftausübung, beispielsweise auf eine Dichtung einer Vakuumkammer, wird vermieden. Die Buchsen können beispielsweise in Ausnehmungen der Gefäßwände eingreifen, Vorsprünge auf den Gefäßwänden übergreifen oder die Gefäße an anderen Oberflächenprofilierungen ergreifen.

Gemäß einer Ausgestaltung weisen die Greifeinrichtungen konzentrisch um die Nadeln angeordnete, verfederte Schutzhülsen und/oder konzentrisch um die Nadeln angeordnete Buchsen auf. Die Schutzhülsen federn beim Einstechen der Nadeln in die Wand eines Gefäßes zurück. Sie können Verletzungen des Bedienpersonales bei einem manuellen Eingriff verhindern (z.B. bei Störungsbeseitigung oder Einsetzen und Entnehmen eines Gefäßes aus dem Ablauf). Eine ähnliche Funktion erfüllen die Buchsen, die bevorzugt etwas gegenüber den Nadeln zurückspringen, damit zugleich die Nadeln und die Buchsen für das Greifen der Gefäße nutzbar sind.

Gemäß einer Ausgestaltung ist eine die Greifeinrichtungen zusammenspannende Federeinrichtung vorhanden. Durch diese Federeinrichtung sind die Greifeinrichtungen stets vorgespannt und somit immer in Greifposition. Hierdurch werden die Greifeinrichtungen mit einer definierten Spannung an den Gefäßen gehalten. Die Gefäße können deshalb auch bei Stromausfall oder Notausschaltung sicher gehalten werden. Andererseits ist es in einer solchen Situation möglich, die Greifeinrichtungen manuell zu öffnen, um ein Gefäß zu entfernen.

Gemäß einer Ausgestaltung drückt die Federeinrichtung die Greifeinrichtungen gegen den Abtrieb der Einrichtung zum Wandeln und/oder Übertrage, wodurch einerseits eine permanente Kopplung der Greifeinrichtung mit dem Abtrieb sichergestellt wird, andererseits jedoch deren Aufhebung ermöglicht wird, für den Fall einer manuellen Entnahme eines Gefäßes.

Die Einrichtung zum Wandeln und/oder Übertragen von Bewegungen kann ausschließlich eine Einrichtung zum Übertragen von Bewegungen sein, die eine lineare oder rotatorische Antriebsbewegung auf die Greifeinrichtungen überträgt. Gemäß einer Ausgestaltung weist die Einrichtung zum Wandeln und/oder Übertragen eine drehgesicherte, axialverschiebliche, mit einer Stirnseite auf die Greifeinrichtungen wirkende Gewindemutter und eine in der Gewindemutter schraubbare, drehfest mit der Kupplungseinrichtung verbundene Spindel auf. Diese Einrichtung zum Wandeln und/oder Übertragen setzt eine Drehbewegung in eine Axialbewegung um, um diese beispielsweise auf als Greifhebel ausgeführte Greifeinrichtungen zu übertragen.

Gemäß einer Ausgestaltung weist das Greifwerkzeug eine Einrichtung zum Indizieren der Lage der Greifeinrichtungen auf, die von einem Sensor des Werkzeughalters bei Befestigung des Greifwerkzeuges am Werkzeughalter abtastbar ist. Hierbei kann der Werkzeughalter die jeweilige Lage der Greifeinrichtungen ermitteln, um deren Bewegungen genau zu steuern. Dies kann beispielsweise für eine Ermittlung der Einstellung der Greifeinrichtungen nach Aufnahme eines Greifwerkzeuges durch den Werkzeughalter dienen. Dies kann aber auch für eine permanente Ermittlung der jeweiligen Lage der Greifeinrichtungen bei deren Betätigung herangezogen werden, um die Greifbewegungen möglichst genau auszuführen.

Gemäß einer Ausgestaltung ist die Einrichtung zum Indizieren ein fest mit der Gewindemutter verbundener Stift. Bei paralleler Ausrichtung des Stiftes zur Gewindeachse ist die jeweilige Axialposition der Gewindemutter durch Abtasten des Stiftes ermittelbar. Daraus ist die Lage der mit der Gewindemutter gekoppelten Greifeinrichtungen ermittelbar.

Gemäß einer Ausgestaltung ist die Kupplungseinrichtung ein drehfest mit dem Antrieb der Einrichtung zum Wandeln und/oder Übertragen verbundener Mitnehmer mit mindestens einer Angriffsfläche für eine Dreh-Antriebseinrichtung. Bei der Antriebsfläche kann es sich beispielsweise um die Seitenwände einer axial und radial gerichteten Nut handeln, in die die Dreh-Antriebseinrichtung mit einer entsprechend geformten Feder eingreift.

Gemäß einer Ausgestaltung weist die Befestigungseinrichtung einen hohlen Befestigungszapfen auf und ist die Kupplungseinrichtung in dem Befestigungszapfen angeordnet oder steht aus diesem hervor und/oder ist die Einrichtung zum Indizieren in dem Befestigungszapfen angeordnet oder steht aus diesem hervor. Hierdurch wird die gleichlaufende Befestigung und Kupplung des Greifwerkzeuges an dem Werkzeughalter und mit seiner Antriebseinrichtung und/oder Zuordnung der Einrichtung zum Indizieren mit einem Sensor des Werkzeughalters begünstigt. Nach einer Ausgestaltung hat der Befestigungszapfen mindestens einen Zylinderteil und mindestens ein konisches Basisteil, was vorteilhaft für das Einführen und Zentrieren des Befestigungszapfens in einer Aufnahme ist. Das Zylinderteil befindet sich am freien Ende des Befestigungszapfens, mit dem dieser in eine Aufnahme eingeführt wird. Am Ende des Einführganges kommt das Basisteil zu Anlage an einem entsprechenden Konus der Aufnahme und hierdurch wird die Zentrierung bewirkt.

Grundsätzlich kann der Befestigungszapfen kraftschlüssig mit dem Werkzeughalter verbunden werden, der beispielsweise eine Klemmeinrichtung zum Einklemmen des Befestigungszapfens aufweisen kann. Gemäß einer Ausgestaltung weist der Befestigungszapfen außen einen Verbindungsteil mit einer lösbaren, formschlüssigen Verbindung auf, der mit einem weiteren formschlüssigen Verbindungsteil des Werkzeughalters zusammenwirken kann. Gemäß einer Ausgestaltung ist der Verbindungsteil ein Bajonett-Verbindungsteil, dem ein komplementäres Bajonett-Verbindungsteil eines Werkzeughalters zuzuordnen ist.

Das erfindungsgemäße Dosierwerkzeug für Laborautomaten zur automatischen Bearbeitung von Proben im Labor hat
- mindestens eine Kolben-Zylindereinrichtung,
- eine Einrichtung zum Wandeln und/oder Übertragen von Drehbewegungen, deren Abtrieb mit der Kolben-Zylindereinrichtung verbunden ist, um diese anzutreiben,
- eine Kupplungseinrichtung zum lösbaren Verbinden mit einer Dreh-Antriebseinrichtung eines Werkzeughalters eines Laborautomaten, die mit dem Antrieb der Einrichtung zum Wandeln und/oder Übertragen gekoppelt ist, um diese anzutreiben,
- eine Befestigungseinrichtung zum lösbaren Befestigen des Dosierwerkzeuges am Werkzeughalter des Laborautomaten bei mit der Antriebseinrichtung des Werkzeughalters verbundener Kupplungseinrichtung und
- eine Einrichtung zum Indizieren des Lage des Kolbens der Kolben-Zylindereinrichtung, die von einem Sensor des Werkzeughalters bei Befestigung des Greifwerkzeuges am Werkzeughalter abtastbar ist.

Dadurch, daß das erfindungsgemäße Dosierwerkzeug eine Einrichtung zum Indizieren der Lagen des Kolbens aufweist, ist es über einen Sensor des Werkzeughalters möglich, die Lage des Kolbens genau festzustellen und über die Antriebseinrichtung die Dosierung genau zu steuern. Dies kann für ein anfängliches Ermitteln der Lage des Kolbens nach dem Befestigen des Dosierwerkzeuges am Werkzeughalter und für eine laufende Überwachung der Lage des Kolbens beim Dosieren genutzt werden.

Die Einrichtung zum Wandeln und/oder Übertragen kann ebenfalls auf verschiedene Weise ausgeführt sein, je nachdem, welche Bewegung die Antriebseinrichtung erzeugt. Wenn die Antriebseinrichtung eine Linearbewegung erzeugt, reicht eine Einrichtung zum Übertragen der Linearbewegung auf den Kolben. Eine Antriebseinrichtung, die eine Drehbewegung erzeugt, weist gemäß einer Ausgestaltung die Einrichtung zum Wandeln und/oder Übertragen eine drehgesicherte, axialverschiebliche, mit einer Stirnseite auf den Kolben der Kolben-Zylindereinrichtung einwirkende Gewindemutter und eine in der Gewindemutter schraubbare, dreh fest mit der Kupplungseinrichtung verbundene Spindel auf. Diese und die nachfolgenden Ausgestaltungen des Dosierwerkzeuges entsprechen oben bereits erläuterten Ausgestaltungen des Greifwerkzeuges, die zweckmäßig im Hinblick auf die vorteilhafte Kopplung mit demselben Werkzeughalter sind.

So ist gemäß einer Ausgestaltung die Einrichtung zum Indizieren ein fest mit der Gewindemutter verbundener Stift. Gemäß einer Ausgestaltung ist die Kupplungseinrichtung ein drehfest mit dem Antrieb der Einrichtung zum Wandeln und/oder Übertragen verbundener Mitnehmer mit mindestens einer Angriffsfläche für eine Dreh-Antriebseinrichtung des Werkzeughalters. Gemäß einer Ausgestaltung weist die Befestigungseinrichtung einen hohlen Befestigungszapfen auf und ist die Kupplungseinrichtung in dem Befestigungszapfen angeordnet oder steht aus diesem hervor und/oder ist die Einrichtung zum Indizieren in dem Befestigungszapfen angeordnet oder steht aus diesem hervor. Gemäß einer Ausgestaltung hat der Befestigungszapfen mindestens einen Zylinderteil und mindestens ein konisches Basisteil. Gemäß einer Ausgestaltung weist der Befestigungszapfen außen einen Verbindungsteil einer lösbaren, formschlüssigen Verbindung auf. Diese ist gemäß einer Ausgestaltung ein Bajonett-Verschlußteil. Insoweit gelten die oben bereits erläuterten weiteren Vorteile der entsprechenden Ausgestaltungen des Greifwerkzeuges.

Gemäß einer Ausgestaltung, die ebenfalls gleichermaßen für das Greifwerkzeug und das Dosierwerkzeug gilt, ist an dem jeweiligen Werkzeug ein Chip angebracht, der Daten über das jeweilige Werkzeug enthält, die von außen auslesbar sind. Hierdurch ist es möglich, die Daten des jeweiligen Werkzeuges von außen zu lesen, beispielsweise wenn dieses in dem Werkzeughalter plaziert ist, um die Daten des Werkzeuges bei dessen Einsatz zu berücksichtigen.

Der erfindungsgemäße Werkzeughalter für einen Laborautomaten zur automatischen Bearbeitung von Proben im Labor, der insbesondere geeignet zum Halten und Bewegen von Greifwerkzeugen und Dosierwerkzeugen der vorerwähnten Art ist, hat
- eine Dreh-Antriebseinrichtung zum wahlweisen Antreiben eines Greif-oder eines Dosierwerkzeuges,
- eine weitere Kupplungseinrichtung zum wahlweisen Verbinden der Dreh-Antriebseinrichtung mit einer Kupplungseinrichtung eines Greif-oder eines Dosierwerkzeuges,
- eine weitere Befestigungseinrichtung zum wahlweisen Befestigen der Befestigungseinrichtung eines Greif- oder eines Dosierwerkzeuges bei miteinander gekuppelten Kupplungseinrichtungen des Werkzeughalters und des Greifwerkzeuges oder des Dosierwerkzeuges und
- eine Steuereinrichtung zum wahlweisen Steuern der Bewegungen des Greifwerkzeuges oder eines Dosierwerkzeuges.

Dadurch, daß der erfindungsgemäße Werkzeughalter eine Steuereinrichtung aufweist, die wahlweise die Bewegung des Greifwerkzeuges oder eines Dosierwerkzeuges steuert, ist es möglich, mit demselben Werkzeughalter die Bewegung sowohl eines Greifwerkzeuges als auch eines Dosierwerkzeuges zu steuern, die diese in einem Laborautomaten auszuführen haben. Ein Greifwerkzeug kann also so gesteuert werden, daß es ein Gefäß ergreift und losläßt, dieses transportiert, dreht, schüttelt, stapelt bzw. jede andere erdenkliche Bewegung. Bei einem Dosierwerkzeug kann insbesondere das Aufnehmen, Abnehmen, Verdünnen, Dispensieren, Mischen und Übertragen von Proben gesteuert werden.

Ausgestaltungen des Werkzeughalters entsprechen oben bereits beschriebenen Ausgestaltungen des Greifwerkzeuges und des Dosierwerkzeuges.

Gemäß einer Ausgestaltung weist die weitere Kupplungseinrichtung mindestens eine weitere Angriffsfläche für eine Dreh-Antriebseinrichtung auf.

Gemäß einer Ausgestaltung hat die Befestigungseinrichtung eine Aufnahme für einen Befestigungszapfen eines Greif- oder Dosierwerkzeuges und ist die weitere Kupplungseinrichtung der Aufnahme zugeordnet, um in die Kupplungseinrichtung des Greif- oder Dosierwerkzeuges bei in der Aufnahme angeordnetem Befestigungszapfen einzukuppeln.

Gemäß einer Ausgestaltung hat die Aufnahme mindestens einen zylindrischen Abschnitt und mindestens einen konischen Anfangsabschnitt.

Gemäß einer Ausgestaltung ist der Aufnahme ein weiteres Bajonett-Verbindungsteil zum lösbaren Verbinden mit einem Bajonett-Verbindungsteil des Befestigungszapfens einer Greif- oder Dosiervorrichtung zugeordnet.

Gemäß einer weiteren Ausgestaltung ist das weitere Bajonett-Verbindungsteil motorisch antreibbar und steuert die Steuereinrichtung die Bewegung des weiteren Bajonett-Verbindungsteiles. Dies ermöglicht ein automatisches Verbinden des Werkzeughalters mit einem Greif- oder Dosierwerkzeug in einem Laborautomaten.

Gemäß einer Ausgestaltung ist der Aufnahme ein Sensor zugeordnet, um eine Einrichtung zum Indizieren eines mit dem Befestigungszapfen in der Aufnahme angeordneten Greif- oder Dosierwerkzeuges abzutasten, und ist der Sensor mit der Steuereinrichtung verbunden, um die Bewegungen in Abhängigkeit von Lage der Greifeinrichtungen oder des Kolbens zu steuern.

Gemäß einer Ausgestaltung weist der Werkzeughalter einen weiteren Sensor zum Abtasten eines Chips enthaltend Daten eines Greif- oder Dosierwerkzeuges auf, der mit der Steuereinrichtung verbunden ist, um die Bewegungen in Abhängigkeit von den Daten des Greifwerkzeugs oder Dosierwerkzeugs zu steuern.

Gemäß einer Ausgestaltung weist der Werkzeughalter eine Verlagerungseinrichtung zum Verlagern des Werkzeughalters entlang mindestens einer und/oder um mindestens eine Raumachse auf, welche Verlagerung von der Steuereinrichtung steuerbar ist, um mit dem Greifwerkzeug verschiedene Gefäßpositionen und/oder Bewegungen des Greifwerkzeuges und Dosierwerkzeuges zu erreichen und/oder durchzuführen.

Schließlich bezieht die Erfindung ein System zum Greifen von Gefäßen und/oder Dosieren von Proben mit einem Greifwerkzeug der vorerwähnten Art und/oder ein Dosierwerkzeug der vorerwähnten Art und einem Werkzeughalter der vorerwähnten Art ein.

Die Erfindung wird nachfolgend anhand der anliegenden Zeichnungen von Ausführungsbeispielen näher erläutert. In den Zeichnungen zeigen:
Fig. 1 ein Greifwerkzeug in einem perspektivischen Sprengbild;
Fig. 2 dasselbe Greifwerkzeug zusammengebaut in der Draufsicht;
Fig. 3 dasselbe Greifwerkzeug zusammengebaut in einem Vertikalschnitt;
Fig. 4 ein Dosierwerkzeug in einer perspektivischen Ansicht schräg von oben;
Fig.- 5 dasselbe Dosierwerkzeug in einer Draufsicht;
Fig. 6 dasselbe Dosierwerkzeug in einem Vertikalschnitt;
Fig. 7 einen Werkzeughalter für einen Laborautomaten in einem perspektivischen Sprengbild;
Fig. 8 denselben Werkzeughalter zusammengebaut in einem Vertikalschnitt;
Fig. 9 denselben Werkzeughalter bestückt mit einem Greifwerkzeug in einem weiteren Vertikalschnitt;
Fig. 10 derselbe Werkzeughalter bestückt mit einem Dosierwerkzeug in einem Vertikalschnitt.

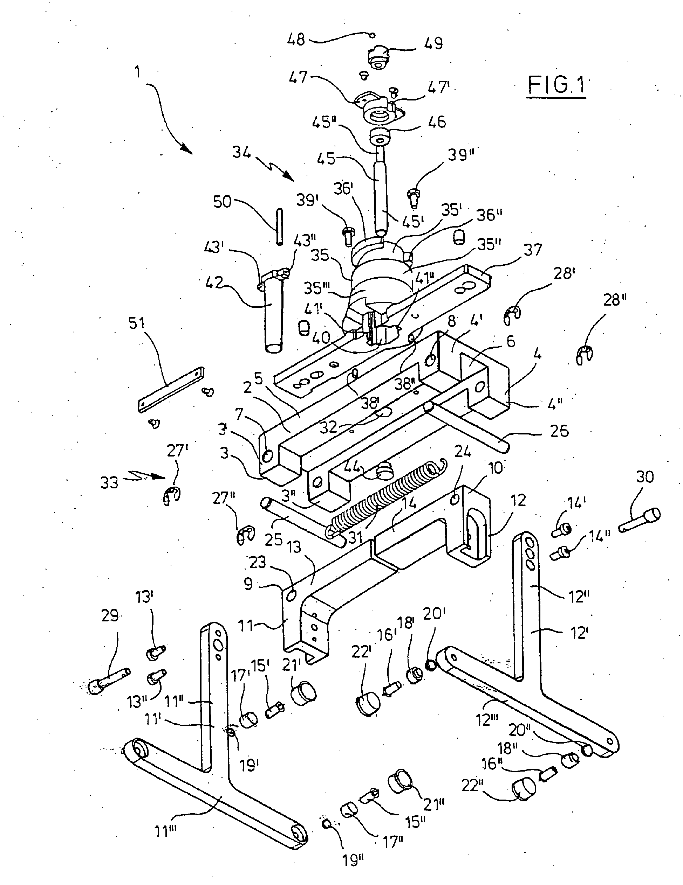

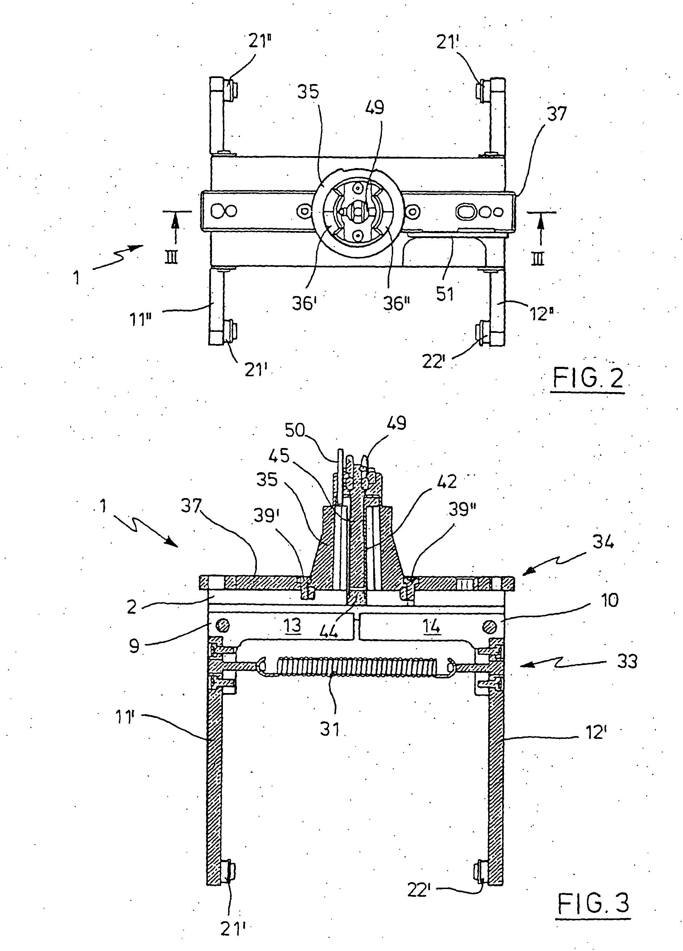

Gemäß Fig. 1 bis 3 hat das Greifwerkzeug 1 einen im wesentlichen U-förmigen Lagerkörper 2, der eine quer durch die Schenkel 3, 4 und in die Basis 5 hineinverlaufende Nut 6 aufweist. Hierdurch werden die Schenkel 3, 4 in Lagerböcke 3', 3'', 4', 4'' unterteilt. Durch jeden Schenkel 3, 4 verläuft in Längsrichtung des Lagerkörpers 2 eine Lagerbohrung 7, 8.

Ferner weist das Greifwerkzeug 1 zwei Greifhebel 9, 10 auf, die jeweils einen Greifarm 11, 12 und einen davon rechtwinklig abgewinkelten Antriebsarm 13, 14 aufweisen.

Auf den kurzen Greifarmen 11, 12 der Greifhebel 9, 10 sind T-förmige Greifarm-Verlängerungen 11', 12'an ihren Mittelschenkeln 11'', 12" mittels Schrauben 13', 13" und 14', 14" lösbar befestigt. An ihren Querschenkeln 11''', 12''' haben sie beidenends an den aufeinander zu gewandten Seiten vorstehend jeweils eine Nadel 15', 15", 16', 16". Diese sind jeweils konzentrisch von einer Schutzhülse 17', 17", 18', 18" umgeben, die jeweils über eine Schraubenfeder 19', 19'', 20', 20'' am Querschenkel 11''', 12''' ''' abgestützt ist. Die Schutzhülsen 17', 17", 18', 18" stehen unbelastet bis zum Niveau der Spitzen der Nadeln 15', 15'', 16', 16'' vor und sind demgegenüber entgegen Federwirkung zum Querschenkel 11''', 12''' hin verlagerbar.

Konzentrisch um die Schutzhülsen 17', 17'', 18', 18'' sind wiederum Buchsen 21', 21'', 22', 22'' angeordnet, die weniger weit als die Nadeln 15', 15", 16', 16" von den Querschenkeln 11''', 12''' vorstehen.

Die Greifhebel 9, 10 haben in den Ecken zwischen den Greifarmen 11, 12 und Antriebsarmen 13, 14 quergerichtete weitere Lagerbohrungen 23, 24. Die Greifhebel 9, 10 sind in die Nut 6 eingesetzt und an Lagerbolzen 25 und 26 gelagert, die durch die Lagerbohrungen 7, 23 und 8, 24 geführt sind. Die Lagerbolzen 25, 26 sind durch endseitige Sicherungsringe 27', 27", 28', 28" gesichert.

In die Greifarme 11, 12 sind Befestigungsbolzen 29, 30 eingesetzt, die auf den voneinander abgewandten Seiten von einem Kopf gegen Herausziehen gesichert sind und auf den einander zugewandten Seiten Querbohrungen haben. In diese Querbohrungen ist eine Schraubenzugfeder 31 mit ihren endseitigen Ösen eingehängt.

Der Grundkörper 2 hat im Zentrum eine quergerichtete Durchbohrung 32.

Vorstehende Elemente bilden insgesamt ein Unterteil 33. Darauf hat das Greifwerkzeug ein Oberteil 34. Dieses hat einen hohlen Befestigungszapfen 35. Dieser hat einen oberen zylindrischen Abschnitt 35', der am Außenumfang zwei Klauen 36', 36" trägt, um einen Bajonett-Verschlußteil zu bilden. Die Klauen 36', 36'' haben eine leichte Gewindesteigung zum Verspannen einer Bajonett-Verbindung.

Ferner hat der Zapfen 35 einen mittleren Zylinderteil 35" mit einem größeren Außendurchmesser als das Zylinderteil 35' und ein nach unten konisch sich erweiterndes Basisteil 35'''.

Das Basisteil 35''' ist unten fest mit einer streifenförmigenBefestigungsplatte 37 verbunden. Die Befestigungsplatte 37 ist auf der Oberseite des Grundkörpers 2 mittels Stiften 38', 38" und Schrauben 39', 39" ausgerichtet und fixiert. Sie ist so ausgerichtet, daß eine längs durch den Befestigungszapfen 35 und quer durch die Befestigungsplatte 37 verlaufende Bohrung 40 auf den Durchgang 32 der Grundplatte 2 ausgerichtet ist.

Die Bohrung 40 hat zwei diametral einander gegenüberliegende Längsnuten 41' 41".

In die Bohrung 40 ist eine hülsenförmige Gewindemutter 42 eingesetzt, die mit zwei oben radial vorspringenden Flügeln 43', 43" in den Längsnuten 41', 41'' geführt ist.

In die Gewindemutter 42 ist unten ein stopfenartiges Distanzstück 44 eingesetzt.

Ferner ist in die Gewindemutter 42 eine Spindel 45 eingeschraubt. Diese hat einen von dem Gewindeabschnitt 45' vorstehenden Zapfenabschnitt 45", an dem sie in einem Kugellager 46 gelagert ist, das mittels einer Lagerbefestigung 47 im oberen Zylinderteil 35' des Befestigungszapfens 35 verschraubt ist.

An einem über das Kugellager 46 hinausstehenden Abschnitt des Zapfenabschnittes 45" ist mittels eines radialen Gewindestiftes 48 ein Mitnehmer 49 drehfest fixiert, der an seinem freien Ende eine radial und axial gerichtete Nut zum Einführen eines klingenförmigen Antriebsorganes aufweist.

In dem Flügel 43" der Gewindemutter 42 ist ein Zylinderstift 50 fixiert, der parallel zur Mittelachse der Gewindemutter 42 ausgerichtet durch eine Nut 47' der Lagerbefestigung geführt ist und oben aus dem Befestigungszapfen 35 heraussteht.

Auf einer Seite der Befestigungsplatte 37 ist eine Leiterplatte 51 mit einem Chip fixiert, auf dem Daten über das Greifwerkzeug 1 gespeichert sind. Der Chip ist von außen lesbar.

Durch Drehen des Mitnehmers 49 verschiebt die axial im Befestigungszapfen 35 festgehaltene Spindel 45 die Gewindemutter 42 axial, welche unverdrehbar in dem Befestigungszapfen geführt ist. Wenn die Gewindemutter 42 zu den Antriebsarmen 13, 14 hin verlagert wird, drückt sie über das Distanzstück 44 gegen deren innere Enden und schwenkt die Greifarme 11, 12 entgegen der Wirkung der Feder 33 auseinander. Das Greifwerkzeug 1 ist dann über einem zu greifenden Gegenstand positionierbar. Durch Drehen des Mitnehmers 49 im Gegensinne ist die Gewindemutter 42 zurückverlagerbar, so daß die Zugfeder 33 die Greifarme 11, 12 zusammenschwenkt und deren Verlängerungen 11''', 12''' gegen das zu greifende Gefäß schwenken. Die Greifarm-Verlängerungen 11', 12' sind für das Greifen einer Mikrotiterplatte konzipiert und drücken mit den Nadeln 15', 15", 16', 16" in deren Seitenwände hinein bzw. greifen mit den Buchsen 21', 21 ", 22', 22" in seitliche Ausnehmungen der Mikrotiterplatte hinein.

Die Federspannung reicht aus, die Mikrotiterplatte festzuhalten. Mittels des Greifwerkzeuges 1 ist sie dann transportierbar.

Durch Drehen des Mitnehmers 49 sind die Greifarm-Verlängerungen 11', 12' auseinanderschwenkbar, um die Mikrotiterplatte freizugeben. Die Greifarm-Verlängerungen 11', 12' sind auch manuell auseinanderschwenkbar, um eine Mikrotiterplatte zu entnehmen. Die jeweilige Position der Greifarme wird von dem Zylinderstift 50 indiziert, dessen Lage mittels eines Sensors von außen abgreifbar ist.

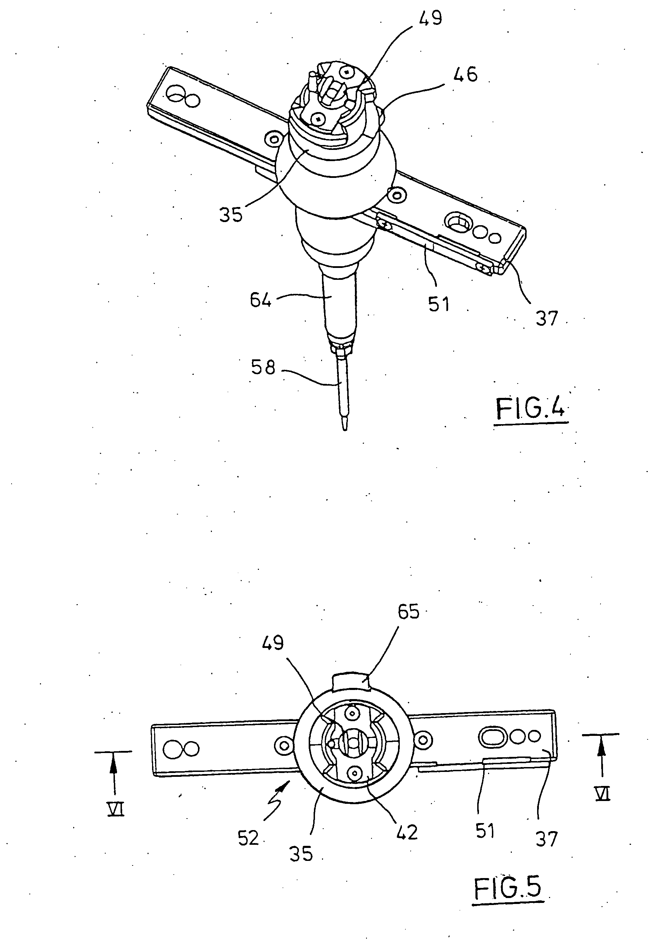

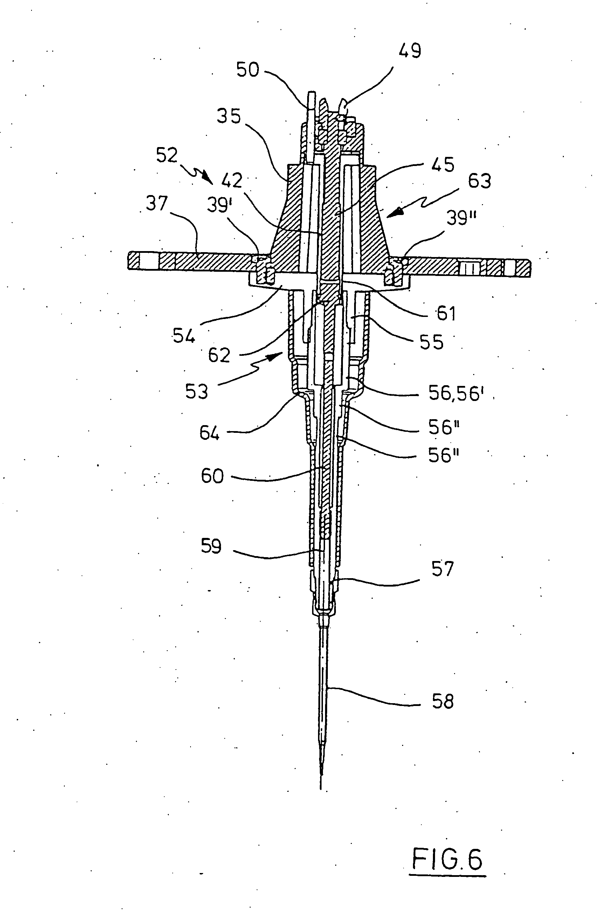

Gemäß Fig. 4 bis 6 weist ein Dosierwerkzeug 52 ein Unterteil 53 mit einer Basisplatte 54 auf, von der ein Hülsenabschnitt 55 nach unten vorsteht. In den Hülsenabschnitt 55 ist ein Schaft 56 eingeschraubt, der eine Folge von zylindrischen Abschnitten 56', 56''' mit sich nach unten verringernden Durchmessern aufweist.

Am unteren Ende des zylindrischen Abschnittes 56''' ist ein Konus 57 ausgebildet, auf den eine herkömmliche Pipettenspitze 58 aufgesteckt ist.

Der zylindrische Abschnitt 56''' enthält im unseren Teil einen Zylinder 59, in dem ein Kolben 60 abdichtend eingeführt ist. Der Kolben 60 erstreckt sich über das obere Ende des Schaftes 56 hinaus bis zu einer zentralen Durchbohrung 61 der Basisplatte 54. Dort hat der Kolben 60 einen Verankerungsabschnitt 62.

Auf der Basisplatte 54 ist ein Oberteil 63 befestigt, dessen Aufbau genau dem des Oberteiles 34 des Greifwerkzeuges 1 entspricht. Dabei ist die Gewindemutter 42 unten nicht mit einem Distanzstück 44 versehen, sondern mit dem Verankerungsabschnitt 62 des Kolbens 60 verschraubt. Für die Einzelheiten wird auf die obige Beschreibung des Oberteiles 34 Bezug genommen.

Am Schaft 56 ist eine Abwerferhülse 64 geführt. Diese ist von einer nicht gezeigten Federvorrichtung zum Oberteil 63 hin vorgespannt. Am oberen Ende weist sie eine seitlich vorstehende Betätigungsfahne 65 auf.

Durch Drehen des Mitnehmers 49 ist der Kolben 60 in dem Zylinder 59 verschiebbar, um Probenflüssigkeit in die Pipettenspitze 58 aufzusaugen bzw. aus dieser auszustoßen. Die jeweilige Lage des Kolbens 60 wird dabei von dem Zylinderstift 50 indiziert. Durch Verlagern der Betätigungsfahne 65 ist die Pipettenspitze 58 mittels der Abwerferhülse 64 vom Konus 57 abdrückbar.

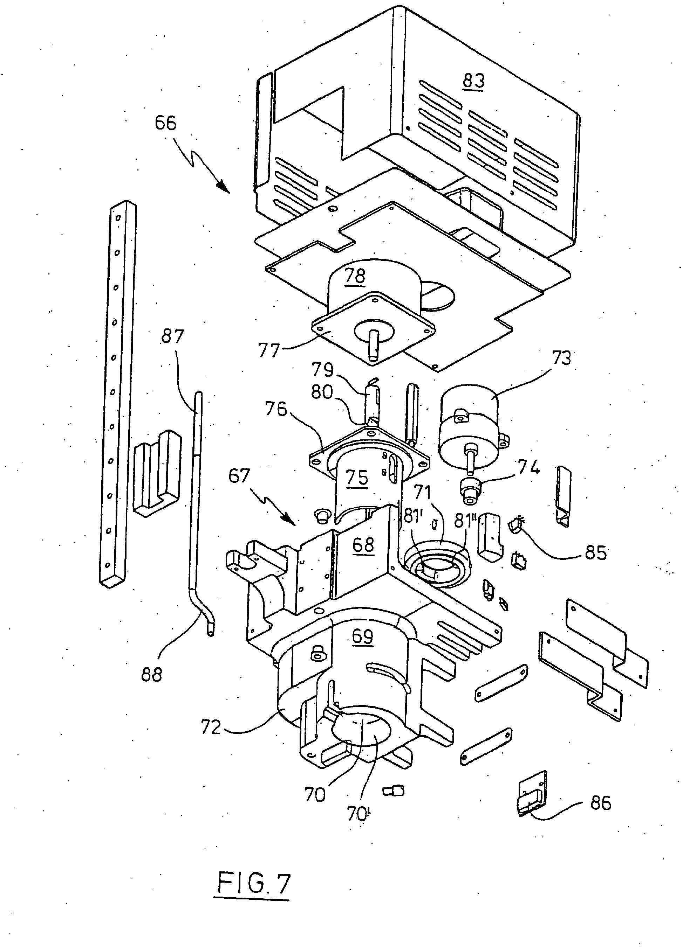

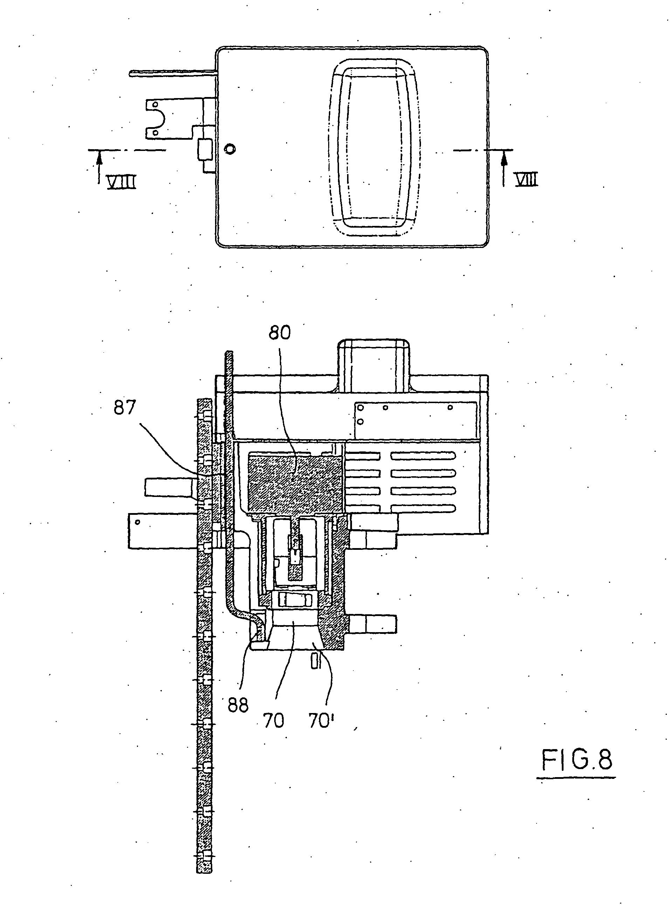

Gemäß Fig. 7 und 8 hat ein Werkzeughalter 66 ein Basisteil 67, das einen im wesentlichen L-förmigen Abschnitt 68 und einen davon nach unten vorstehenden etwa hülsenförmigen Abschnitt 69 aufweist. Der hülsenförmige Abschnitt 69 hat eine zylindrische Aufnahme 70, in der ein Bajonett-Verschlußring 71 drehbar gelagert ist. Die Aufnahme 70 hat einen konischen Anfangsabschnitt 70'. Neben dem hülsenformigen Abschnitt 69 befindet sich eine Kammer 72, in der ein Antriebsmotor 73 angeordnet ist, der auf einer Welle ein Antriebszahnrad 74 fixiert hat, das mit dem Bajonett-Verschlußring 71 kämmt.

In der zylindrischen Aufnahme 70 des hülsenförmigen Abschnittes 68 ist ein Zentrierring 75 geführt, der oben einen Flansch 76 aufweist. An dem Flansch 76 ist mit einem entsprechenden Gegenflansch 77 ein Schrittmotor 78 angeschraubt. Auf der Welle des Schrittmotors 78 ist eine weitere Kupplungseinrichtung 79 fixiert, deren freies Ende mit einer Klinge 80 versehen ist.

Die Klinge 80 ist etwas über dem Bajonett-Verschlußring 71 angeordnet. Dieser ist am Innenumfang mit diametral einander gegenüberliegenden Klauen 81', 82'' versehen, die eine leichte Steigung aufweisen.

Das Basisteil 67 ist oben von einem kastenförmigen Gehäuse 83 verschlossen. Im Gehäuse 83 sind oberhalb des Basisteiles 67 Sensoren 84 für die Lageerkennung eines axial in die Aufnahme 70 eingeführten Stiftes 50 und 85 in eine Überwachung der Lage des Bajonett-Verschlußringes 71 vorhanden.

Außen am Gehäuse ist ein Sensor 86 für die Detektion eines Chips auf einer Leiterplatte 51 vorhanden.

Ferner ist außen am Basisteil 68 ein stangenförmiger Abwerfer 87 entlanggefiihrt, der mittels eines nicht gezeigten Linearantriebes axial verschiebbar ist. Ein hakenförmiger Endabschnitt 88 des Abwerfers 87 ist dem konischen Öffnungsbereich der zylindrischen Aufnahme 70 zugeordnet.

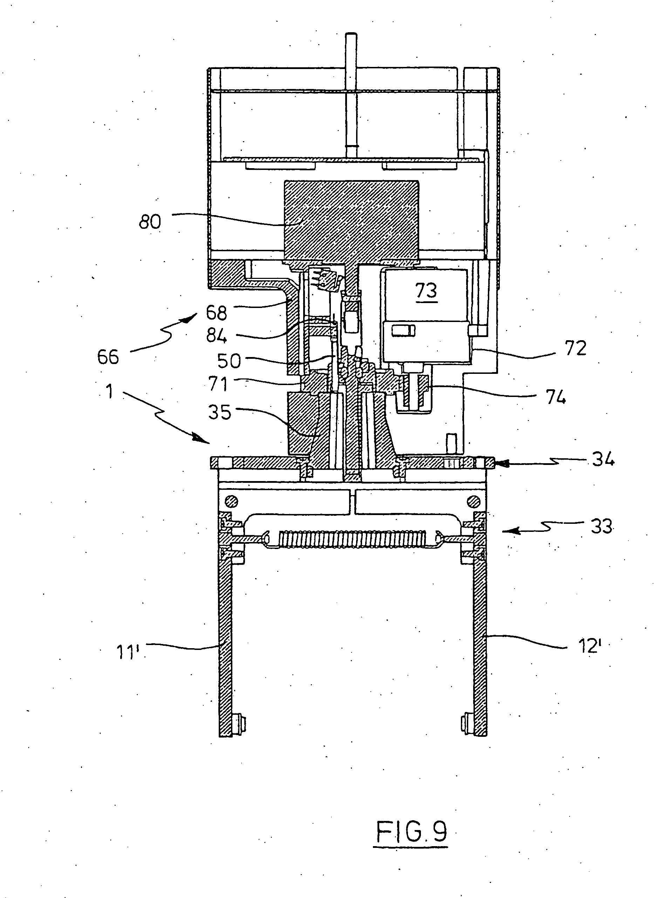

Gemäß Fig. 9 ist ein Greifwerkzeug 1 mit dem Befestigungszapfen 35 in der zylindrischen Aufnahme 76 des Werkzeughalters 66 eingeführt und darin durch Verdrehen des Bajonett-Verschlußringes 71 mittels des Antriebsmotors 73 fixiert. Der Sensor 84 detektiert die Position des Zylinderstiftes 50 und damit die Stellung der Greifarm-Verlängerungen 11', 12'. Durch Ansteuern des Schrittmotors 78 sind die Greif-Hilfsarme 11', 12' schwenkbar. Der Werkzeughalter 66 ist mittels einer nicht gezeigten XYZ-Verfahreinrichtung verfahrbar, um verschiedene Gefäßpositionen eines Laborautomaten anzusteuern. Eine zum Werkzeughalter 66 gehörende elektronische Steuereinrichtung steuert die verschiedenen Bewegungen.

Ebenfalls automatisch durch Anfahren einer Ablageposition und Ansteuern des Antriebsmotors 73 ist das Greifwerkzeug 1 von dem Werkzeughalter 66 trennbar.

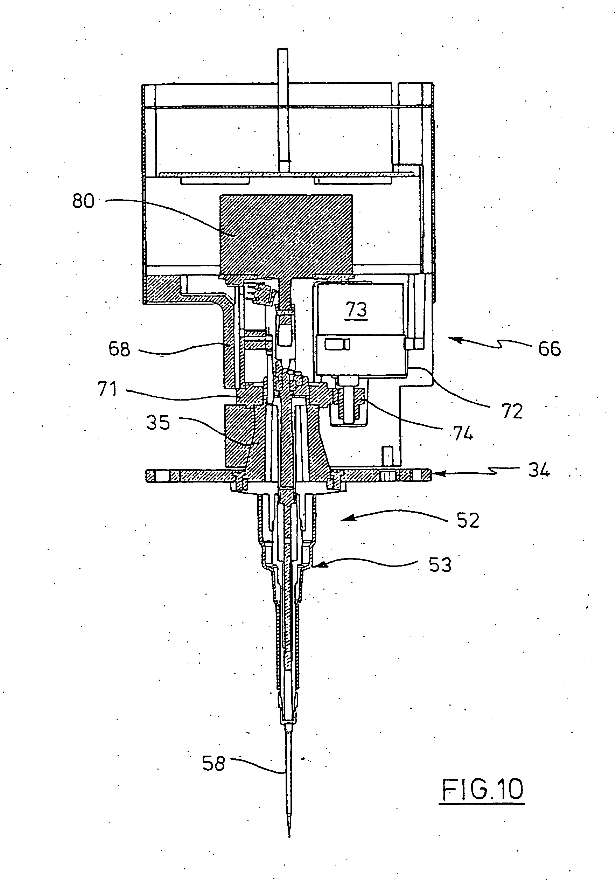

Gemäß Fig. 10 ist ein Dosierwerkzeug 52 entsprechend am Werkzeughalter 66 fixiert. Die Kolbenlage wird durch den Zylinderstift 50 indiziert. Die Daten des aufgenommenen Dosierwerkzeugs 52 werden der Steuereinrichtung durch Abtasten des Chips auf der Leiterplatte 51 vermittelt. Durch Betätigen des Schrittmotors 78 wird von der Kupplungseinrichtung 79 der Mitnehmer 49 gedreht und die Bewegung des Kolbens 60 gesteuert. Hierdurch wird die Aufnahme bzw. Abgabe von Probenflüssigkeit bewirkt. Die Pipettenspitze 58 ist durch (motorisches) Verschieben des Abwerfers 87 abtrennbar, der auf die Betätigungsfahne 65 drückt. Auch das Dosierwerkzeug 52 wird durch Betätigen des Antriebsmotors 73 leicht mit dem Werkzeughalter 66 verbunden bzw. von diesem getrennt.

## Patentansprüche

1. Greifwerkzeug für Laborautomaten zur automatischen Bearbeitung von Proben im Labor mit
- Greifeinrichtungen (9, 10) zum Greifen von Gefäßen,
- einer Einrichtung zum Wandeln und/oder Übertragen (42, 45) von Drehbewegungen, deren Abtrieb mit den Greifeinrichtungen (9, 10) gekoppelt ist, um diese anzutreiben,
- einer Kupplungseinrichtung (49) zum lösbaren Verbinden mit einer Dreh-Antriebseinrichtung (78) eines Werkzeughalters (66) eines Laborautomaten, die mit dem Antrieb der Einrichtung zum Wandeln und/oder Übertragen (42, 45) gekoppelt ist, um diese anzutreiben, und
- einer Befestigungseinrichtung (35, 36) zum lösbaren Befestigen des Greifwerkzeuges (1) am Werkzeughalter (66) des Laborautomaten bei mit der Antriebseinrichtung (78) des Werkzeughalters (66) verbundener Kupplungseinrichtung (49).

2. Greifwerkzeug nach Anspruch 1, bei dem die Greifeinrichtungen schwenkbar gelagerte Greifhebel (9, 10) sind.

3. Greifwerkzeug nach Anspruch 2, bei dem die Greifhebel (9, 10) etwa parallele Greifarme (11, 12) und abgewinkelte, aufeinander zu gerichtete Antriebsarme (13, 14) aufweisen, mit deren benachbarten Enden der Antrieb der Einrichtung zum Wandeln und/oder Übertragen (42, 45) gekoppelt ist.

4. Greifwerkzeug nach einem der Ansprüche 1 bis 3, bei dem die Greifeinrichtungen (9, 10) aufeinander zu gerichtete Nadeln (15, 16) und/oder Buchsen (21, 22) aufweisen.

5. Greifwerkzeug nach Anspruch 4, bei dem die Greifeinrichtungen (9, 10) konzentrisch um die Nadeln (15, 16) angeordnete, verfederte Schutzhülsen (17, 18) und/oder konzentrisch um die Nadeln angeordnete Buchsen (21, 22) aufweisen.

6. Greifwerkzeug nach einem der Ansprüche 1 bis 5, das eine die Greifeinrichtungen (9, 10) zusammenspannende Federeinrichtung (31) aufweist.

7. Greifwerkzeug nach Anspruch 6, bei dem die Federeinrichtung (31) die Greifeinrichtungen (9, 10) gegen den Abtrieb der Einrichtung zum Wandeln und/oder Übertragen (42, 45) drückt.

8. Greifwerkzeug nach einem der Ansprüche 1 bis 7, bei dem die Einrichtung zum Wandeln und/oder Übertragen (42, 45) eine drehgesicherte, axialverschiebliche, mit einer Stirnseite auf die Greifeinrichtungen (9, 10) einwirkende Gewindemutter (42) und eine in der Gewindemutter (42) schraubbare, drehfest mit der Kupplungseinrichtung (49) verbundene Spindel (45) aufweist.

9. Greifwerkzeug nach einem der Ansprüche 1 bis 8, das eine Einrichtung zum Indizieren (50) der Lage der Greifeinrichtungen (9, 10) aufweist, die von einem Sensor (84) des Werkzeughalters (66) bei Befestigung des Greifwerkzeuges (1) am Werkzeughalter (66) abtastbar ist.

10. Greifwerkzeug nach Anspruch 9, bei dem die Einrichtung zum Indizieren ein fest mit der Gewindemutter verbundener Stift (50) ist.

11. Greifwerkzeug nach einem der Ansprüche 1 bis 10, bei dem die Kupplungseinrichtung ein drehfest mit dem Antrieb der Einrichtung zum Wandeln und/oder Übertragen (42, 45) verbundener Mitnehmer (49) mit mindestens einer Angriffsfläche für eine Dreh-Antriebseinrichtung ist.

12. Greifwerkzeug nach einem der Ansprüche 1 bis 11, bei dem die Befestigungseinrichtung einen hohlen Befestigungszapfen (35) aufweist und die Kupplungseinrichtung (49) in dem Befestigungszapfen angeordnet ist oder aus diesem hervorsteht und/oder die Einrichtung zum Indizieren (50) in dem Befestigungszapfen (35) angeordnet ist oder aus diesem hervorsteht.

13. Greifwerkzeug nach Anspruch 12, bei dem der Befestigungszapfen (35) außen einen Verbindungsteil (36) einer lösbaren, formschlüssigen Verbindung aufweist.

14. Greifwerkzeug nach Anspruch 13, bei dem der Befestigungszapfen einen Bajonett-Verbindungsteil (36) aufweist.

15. Greifwerkzeug nach einem der Ansprüche 12 bis 14, bei dem der Befestigungszapfen (35) mindestens einen Zylinderteil (35', 35") und mindestens ein konisches Basisteil (35''') hat.

16. Greifwerkzeug nach einem der Ansprüche 1 bis 15, an dem ein Chip mit von außen lesbaren Daten des Greifwerkzeuges (1) angeordnet ist.

17. Dosierwerkzeug für Laborautomaten zur automatischen Bearbeitung von Proben im Labor mit
- mindestens einer Kolben-Zylindereinrichtung (59, 60),
- einer Einrichtung zum Wandeln und/oder Übertragen (42, 45) von Drehbewegungen, deren Abtrieb mit der Kolben-Zylindereinrichtung (59, 60) verbunden ist, um diese anzutreiben,
- einer Kupplungseinrichtung (49) zum lösbaren Verbinden mit einer Dreh-Antriebseinrichtung (78) eines Werkzeughalters (66) eines Laborautomaten, die mit dem Antrieb der Einrichtung zum Wandeln und/oder Übertragen (42, 45) gekoppelt ist, um diese anzutreiben,
- einer Befestigungseinrichtung (35, 36) zum lösbaren Befestigen des Dosierwerkzeuges (52) am Werkzeughalter (66) des Laborautomaten bei mit der Antriebseinrichtung (78) des Werkzeughalters (66) verbundener Kupplungseinrichtung (49) und
- einer Einrichtung zum Indizieren (50) der Lage des Kolbens (59) der Kolben-Zylindereinrichtung (59, 60), die von einem Sensor (84) des Werkzeughalters (66) bei Befestigung des Dosierwerkzeuges (52) am Werkzeughalter abtastbar ist.

18. Dosierwerkzeug nach Anspruch 17, bei dem die Einrichtung zum Wandeln und/oder Übertragen (42, 45) eine drehgesicherte, axialverschiebliche, mit einer Stirnseite auf den Kolben der Kolben-Zylindereinrichtung einwirkende Gewindemutter (42) und eine in der Gewindemutter schraubbare, drehfest mit der Kupplungseinrichtung verbundene Spindel (45) aufweist.

19. Dosierwerkzeug nach Anspruch 18, bei dem die Einrichtung zum Indizieren (50) ein fest mit der Gewindemutter (42) verbundener Stift ist.

20. Dosierwerkzeug nach einem der Ansprüche 17 bis 19, bei dem die Kupplungseinrichtung ein drehfest mit dem Antrieb der Einrichtung zum Wandeln und/oder Übertragen (42, 45) verbundener Mitnehmer (49) mit mindestens einer Angriffsfläche für eine Dreh-Antriebseinrichtung des Werkzeughalters (66) ist.

21. Dosierwerkzeug nach einem der Ansprüche 17 bis 20, bei dem die Befestigungseinrichtung (35, 36) einen hohlen Befestigungszapfen (35) aufweist und die Kupplungseinrichtung (49) in dem Befestigungszapfen (35) angeordnet ist oder aus diesem hervorsteht und/oder die Einrichtung zum Indizieren (50) in dem Befestigungszapfen (35) angeordnet ist oder aus diesem hervorsteht.

22. Dosierwerkzeug nach Anspruch 21, bei dem der Befestigungszapfen (35) außen einen Verbindungsteil (36) einer lösbaren, formschlüssigen Verbindung aufweist.

23. Dosierwerkzeug nach Anspruch 22, bei dem der Befestigungszapfen (35) einen Bajonett-Verschlußteil (36) aufweist.

24. Dosierwerkzeug nach einem der Ansprüche 21 bis 23, bei dem der Befestigungszapfen (35) mindestens einen Zylinderteil (35', 35") und mindestens ein konisches Basisteil (35''') hat.

25. Dosierwerkzeug nach einem der Ansprüche 17 bis 24, das einen Chip mit von außen auslesbaren Daten des Dosierwerkzeuges (52) aufweist.

26. Werkzeughalter für einen Laborautomaten zur automatischen Bearbeitung von Proben im Labor, insbesondere geeignet zum Halten und Bewegen von Greifwerkzeugen (1) und Dosierwerkzeugen (52) nach einem der Ansprüche 1 bis 23, mit
- einer Dreh-Antriebseinrichtung (78) zum wahlweisen Antreiben eines Greif- oder eines Dosierwerkzeuges (1, 52),
- einer weiteren Kupplungseinrichtung (79) zum wahlweisen Verbinden der Dreh-Antriebseinrichtung (78) mit einer Kupplungseinrichtung (49) eines Greif- oder eines Dosierwerkzeuges (1, 52),
- einer weiteren Befestigungseinrichtung (70, 71) zum wahlweisen Befestigen der Befestigungseinrichtung (35, 36) eines Greif- oder eines Dosierwerkzeuges (1, 52) bei miteinander gekuppelten Kupplungseinrichtungen (49, 79) des Werkzeughalters (66) und des Greifwerkzeuges (1) oder des Dosierwerkzeuges (52) und
- einer Steuereinrichtung zum wahlweisen Steuern der Bewegungen eines Greifwerkzeuges (1) oder eines Dosierwerkzeuges (52).

27. Werkzeughalter nach Anspruch 26, bei dem die weitere Kupplungseinrichtung (79) mindestens weitere eine Angriffsfläche zum Übertragen einer Dreh-Antriebsbewegung aufweist.

28. Werkzeughalter nach Anspruch 26 oder 27, bei dem die Befestigungseinrichtung eine Aufnahme (70) für einen Befestigungs zapfen (35) eines Greif- oder Dosierwerkzeuges (1, 52) hat und die weitere Kupplungseinrichtung (79) der Aufnahme (70) zugeordnet ist, um die Kupplungseinrichtung (49) des Greif- oder Dosierwerkzeuges (1, 52) bei in der Aufnahme (70) angeordnetem Befestigungszapfen (35) einzukuppeln.

29. Werkzeughalter nach Anspruch 28, bei der der Aufnahme (70) ein weiteres Bajonett-Verbindungsteil (71) zum lösbaren Verbinden mit einem Bajonett-Verbindungsteil (35, 36) des Befestigungszapfens (35) einer Greif- oder Dosiervorrichtung (1, 52) zugeordnet ist.

30. Werkzeughalter nach Anspruch 29, bei dem das weitere Bajonett-Verbindungsteil (71) motorisch antreibbar ist und die Steuereinrichtung die Bewegung des weiteren Bajonett-Verbindungsteiles (71) steuert.

31. Werkzeughalter nach einem der Ansprüche 26 bis 30, bei der der Aufnahme (70) ein Sensor (84) zugeordnet ist, um eine Einrichtung zum Indizieren (50) eines mit dem Befestigungszapfen (35) in der Aufnahme (70) angeordneten Greif- oder Dosierwerkzeugs (1, 52) abzutasten und der Sensor mit der Steuereinrichtung verbunden ist, um die Bewegungen in Abhängigkeit von der Lage der Greifeinrichtungen (9, 10) oder des Kolbens (60) zu steuern.

32. Werkzeughalter nach einem der Ansprüche 26 bis 31, der einen weiteren Sensor (86) zum Abtasten von Daten eines Greif- oder Dosierwerkzeuges (1, 52) aufweist, der mit der Steuerung verbunden ist, um die Bewegungen in Abhängigkeit von den Daten des jeweils eingesetzten Greifwerkzeuges (1) oder Dosierwerkzeuges (52) zu steuern.

33. Werkzeughalter nach einem der Ansprüche 26 bis 32 mit einer Verlagerungseinrichtung zum Verlagern des Werkzeughalters entlang mindestens einer und/oder um mindestens eine Raumachse, welche Verlagerung von der Steuereinrichtung steuerbar ist, um mit dem Greifwerkzeug (1) verschiedene Gefäßpositionen und mit dem Dosierwerkzeug (52) verschiedene Dosierpositionen zu erreichen.

34. System zum Greifen und Bewegen von Gefäßen und/oder Dosieren von Proben mit einem Greifwerkzeug (1) gemäß einem der Ansprüche 1 bis 16 und/oder einem Dosierwerkzeug (52) gemäß einem der Ansprüche 17 bis 25 und einem Werkzeughalter (66) gemäß einem der Ansprüche 26 bis 33.

## Claims

1. Gripping tool for laboratory machines for automatic processing of samples in a laboratory, with
- gripping appliances (9, 10) for gripping vessels,
- an appliance for converting and/or transferring (42, 45) of rotary motions, the power take-off of which is coupled with the gripping appliances (9, 10) in order to drive them,
- a coupling appliance (49) for detachable connection with a rotary drive appliance (78) of a tool support (66) of an automatic laboratory machine, which is coupled with the drive of the appliance for converting and/or transferring (42, 45) in order to drive it, and
- a mounting appliance (35, 36) for detachable mounting of the gripping tool (1) on the tool support (66) of the automatic laboratory machine, while the coupling appliance (49) is connected with the drive appliance (78) of the tool support (66).

2. Gripping tool according to claim 1, in which the gripping appliances are swivelmounted gripping levers (9, 10).

3. Gripping tool according to claim 2, in which the gripping levers (9, 10) have approximately parallel grapplers (11, 12) and offset driving arms (13, 14), directed towards each other, with the adjacent ends of which the drive of the appliance for converting and/or transferring (42, 45) is coupled.

4. Gripping tool according to one of claims 1 to 3, in which the gripping appliances (9, 10) comprise needles (15, 16) and/or liners (21, 22), directed towards each other.

5. Gripping tool according to claim 4, in which gripping appliances (9, 10) comprise protective sleeves (17, 18) equipped with springs, disposed concentrically around the needles (15, 16), and/or liners (21, 22), disposed concentrically around the needles.

6. Gripping tool according to one of claims 1 to 5, which has a spring appliance (31) clamping the gripping appliances (9, 10) together.

7. Gripping tool according to claim 6, in which the spring appliance (31) presses the gripping appliances (9, 10) against the power take-off of the appliance for converting and/or transferring (42, 45).

8. Gripping tool according to one of claims 1 to 7, in which the appliance for converting and/or transferring (42, 45) has an axially movable, threaded nut (42) secured against rotation, acting on the gripping appliances (9, 10) with a front side, and a spindle (45), screwable in the threaded nut (42) and connected with the coupling appliance (49) in a manner secured against rotation.

9. Gripping tool according to one of claims 1 to 8, which comprises an appliance for indicating (50) the position of the gripping appliances (9, 10), which is scannable by a sensor (84) of the tool support (66) while the gripping tool (1) is mounted on the tool support (66).

10. Gripping tool according to claim 9, in which the appliance for indicating is a pin (50) fixedly connected with the threaded nut.

11. Gripping tool according to one of claims 1 to 10, in which the coupling appliance is a driving feature (49), connected with the drive of the appliance for converting and/or transferring (42, 45) in a manner secured against rotation, with at least one working surface for a rotational drive appliance.

12. Gripping tool according to one of claims 1 to 11, in which the mounting appliance has a hollow mounting spigot (35) and the coupling appliance (49) is disposed in the mounting spigot or sticks out of it, and/or the appliance for indicating (50) is disposed in the mounting spigot (35) or sticks out of it.

13. Gripping tool according to claim 12, in which the mounting spigot (35) on the outside has a connection part (36) of a detachable, positively fitting connection.

14. Gripping tool according to claim 13, in which the mounting spigot has a bayonet-type connection part (36).

15. Gripping tool according to one of claims 12 to 14, in which the mounting spigot (35) has at least one cylinder part (35', 35") and at least one conical base part (35"').

16. Gripping tool according to one of claims 1 to 15, on which a chip is disposed with data of the gripping tool (1), readable from the outside.

17. Dosage tool for laboratory machines for automatic processing of samples in a laboratory, with
- at least one piston-cylinder appliance (59, 60),
- an appliance for converting and/or transferring (42, 45) of rotary motions, the power take-off of which is coupled with the piston-cylinder appliance (59, 60) in order to drive it,
- a coupling appliance (49) for detachable connection with a rotary drive appliance (78) of a tool support (66) of an automatic laboratory machine, which is coupled with the drive of the appliance for converting and/or transferring (42, 45) in order to drive it,
- a mounting appliance (35, 36) for detachable mounting of the dosage tool (52) on the tool support (66) of the automatic laboratory machine, when the coupling appliance (49) is connected with the drive appliance (78) of the tool support (66).
- an appliance for indicating (50) the position of the piston (59) of the piston-cylinder appliance (59, 60), which is scannable by a sensor (84) of the tool support (66) while the dosage tool (52) is mounted on the tool support (66).

18. Dosage tool according to claim 17, in which the appliance for converting and/or transferring (42, 45) has an axially movable, threaded nut (42) secured against rotation, acting on the piston of the piston-cylinder appliance with a front side, and a spindle (45), screwable in the threaded nut (42) and connected with the coupling appliance in a manner secured against rotation.

19. Dosage tool according to claim 18, in which the appliance for indicating (50) is a pin, fixedly connected with the threaded nut (42).

20. Dosage tool according to one of claims 17 to 19, in which the coupling appliance is a driving feature (49), connected with the drive of the appliance for converting and/or transferring (42, 45) in a manner secured against rotation, with at least one working surface for a rotational drive appliance of the tool support (66).

21. Dosage tool according to one of claims 17 to 20, in which the mounting appliance (35, 36) has a hollow mounting spigot (35) and the coupling appliance (49) is disposed in the mounting spigot (35) or sticks out of it, and/or the appliance for indicating (50) is disposed in the mounting spigot (35) or sticks out of it.

22. Dosage tool according to claim 21, in which the mounting spigot (35) on the outside has a connection part (36) of a detachable, positively fitting connection.

23. Dosage tool according to claim 22, in which the mounting spigot (35) has a bayonet-type locking part (36).

24. Dosage tool according to one of claims 21 to 23, in which the mounting spigot (35) has at least one cylinder part (35', 35") and at least one conical base part (35"').

25. Dosage tool according to one of claims 17 to 24, on which a chip is disposed with data of the dosage tool (52), readable from the outside.

26. Tool support for laboratory machines for automatic processing of samples in a laboratory, particularly suited for supporting and moving of gripping tools (1) and dosage tools (52) according to one of claims 1 to 23, with
- a rotary drive appliance (78) for driving of a gripping tool or of a dosage tool (1, 52) at option,
- a further coupling appliance (79) for connecting the rotary drive appliance (78) with a coupling appliance (49) of a gripping tool or of a dosage tool (1, 52) at option,
- a further mounting appliance (70, 71) for mounting the mounting appliance (35, 36) of a gripping tool or of a dosage tool (1, 52) at option, while the coupling appliances (49, 79) of the tool support (66) and the gripping tool (1) or the dosage tool (52) are coupled with each other, and
- a control appliance for controlling the movements of a gripping tool (1) or of a dosage tool (52) at option.

27. Tool support according to claim 26, in which the further coupling appliance (79) has at least one further working surface for the transmission of a rotational drive movement.

28. Tool support according to claim 26 to 27, in which the mounting appliance has an accommodation (70) for a mounting spigot (35) of a gripping- or dosage tool (1, 52), and the further coupling appliance (79) is associated to the accommodation (70), in order to couple in the coupling appliance (49) of the gripping- or dosage tool (1, 52) while the mounting spigot (35) is disposed in the accommodation (70).

29. Tool support according to claim 28, in which a further bayonet-type connection part (71) for detachable connection with a bayonet-type connection part (35, 36) of the mounting spigot (35) of a gripping- or dosage equipment (1, 52) is associated to the accommodation (70).

30. Tool support according to claim 29, in which the further bayonet-type connection part (71) can be driven by a motor, and the control appliance controls the movements of the further bayonet-type connection part (71).

31. Tool support according to one of claims 26 to 30, in which a sensor (84) is associated to the accommodation (70) in order to scan an appliance for indicating (50) of a gripping- or dosage tool (1, 52), disposed in the accommodation (70) with the mounting spigot (35), and the sensor is connected with the control appliance, in order to control the movements, depending on the position of the gripping appliances (9, 10) or the piston (60).

32. Tool support according to one of claims 26 to 31, which has a further sensor (86) for scanning data of a gripping- or dosage tool (1, 52), which is connected with the control element in order to control the movements, depending of the data of the gripping tool (1) or the dosage tool (52) employed, respectively.

33. Tool support according to one of claims 26 to 32, with a displacement appliance facility for displacing the tool support along at least one and/or for at least one spatial axis, which displacement is controllable by the control appliance, in order to reach different vessel positions with the gripping tool (1), and different dosage positions with the dosage tool (52).

34. System for gripping and moving of vessels and/or dosage of samples with a gripping tool (1) according to one of claims 1 to 16 and/or a dosage tool (52) according to one of claims 17 to 25, and a tool support (66) according to one of claims 26 to 33.

## Revendications

1. Outil de préhension pour automates de laboratoire pour le traitement automatique d'échantillons en laboratoire comprenant
- des dispositifs de préhension (9, 10) pour la préhension de récipients,
- un dispositif de transformation et/ou de transmission (42, 45) de mouvements de rotation, dont la sortie est couplée aux dispositifs de préhension (9, 10) afin d'entraîner ceux-ci,
- un dispositif d'accouplement (49) pour l'assemblage de manière détachable avec un dispositif d'entraînement en rotation (78) d'un support d'outil (66) d'un automate de laboratoire, le dispositif d'accouplement (49) étant couplé avec l'entraînement du dispositif de transformation et/ou de transmission (42, 45) afin d'entraîner celui-ci, et
- un dispositif de fixation (35, 36) pour la fixation de manière détachable de l'outil de préhension (1) sur le support d'outil (66) de l'automate de laboratoire lorsque le dispositif d'accouplement (49) est raccordé au dispositif d'entraînement (78) du support d'outil (66).

2. Outil de préhension selon la revendication 1, dans lequel les dispositifs de préhension sont des leviers de préhension (9, 10) pouvant pivoter.

3. Outil de préhension selon la revendication 2, dans lequel les leviers de préhension (9, 10) présentent des bras de préhension (11, 12) approximativement parallèles et des bras d'entraînement (13, 14) coudés dirigés l'un vers l'autre, l'entraînement du dispositif de transformation et/ou de transmission (42, 45) étant couplé avec les extrémités adjacentes desdits bras d'entraînement.

4. Outil de préhension selon l'une des revendications 1 à 3, dans lequel les dispositifs de préhension (9, 10) présentent des pointes (15, 16) et/ou des douilles (21, 22), dirigées l'une vers l'autre.

5. Outil de préhension selon la revendication 4, dans lequel les dispositifs de préhension (9, 10) présentent des manchons de protection (17, 18) languettés placés de manière concentrique autour des pointes (15, 16) et/ou des douilles (21, 22) placées de manière concentrique autour des pointes.

6. Outil de préhension selon l'une des revendications 1 à 5, qui présente un dispositif de ressort (31) tendu entre les dispositifs de préhension (9, 10).

7. Outil de préhension selon la revendication 6, dans lequel le dispositif de ressort (31) presse les dispositifs de préhension (9, 10) contre la sortie du dispositif de transformation et/ou de transmission (42, 45).

8. Outil de préhension selon l'une des revendications 1 à 7, dans lequel le dispositif de transformation et/ou de transmission (42, 45) présente un écrou fileté (42) bloqué en rotation, pouvant se déplacer axialement, influant avec une face terminale sur les dispositifs de préhension (9, 10) et une tige (45) pouvant être vissée dans l'écrou fileté (42), raccordée de manière résistante à la rotation au dispositif d'accouplement (49).

9. Outil de préhension selon l'une des revendications 1 à 8, qui présente un dispositif d'indication (50) de la position des dispositifs de préhension (9, 10), ledit dispositif d'indication pouvant être exploré par un capteur (84) du support d'outil (66) lors de la fixation de l'outil de préhension (1) sur le support d'outil (66).

10. Outil de préhension selon la revendication 9, dans lequel le dispositif d'indication est un goujon (50) raccordé de manière fixe à l'écrou fileté.

11. Outil de préhension selon l'une des revendications 1 à 10, dans lequel le dispositif d'accouplement est un toc d'entraînement (49) raccordé de manière résistante à la rotation à l'entraînement du dispositif de transformation et/ou de transmission (42, 45) avec au moins une surface d'attaque pour un dispositif d'entraînement en rotation.

12. Outil de préhension selon l'une des revendications 1 à 11, dans lequel le dispositif de fixation présente un tenon de fixation creux (35) et le dispositif d'accouplement (49) est placé dans le tenon de fixation ou dépasse de celui-ci et/ou le dispositif d'indication (50) est placé dans le tenon de fixation (35) ou dépasse de celui-ci.

13. Outil de préhension selon la revendication 12, dans lequel le tenon de fixation (35) présente à l'extérieur une pièce d'assemblage (36) d'un assemblage par retenue mécanique détachable.

14. Outil de préhension selon la revendication 13, dans lequel le tenon de fixation présente une pièce d'assemblage à baïonnette (36).

15. Outil de préhension selon l'une des revendications 12 à 14, dans lequel le tenon de fixation (35) a au moins une partie cylindrique (35', 35") et au moins une partie de base conique (35"').

16. Outil de préhension selon l'une des revendications 1 à 15, sur lequel une puce est placée avec des données de l'outil de préhension (1) pouvant être lues de l'extérieur.

17. Outil de dosage pour automates de laboratoire pour le traitement automatique d'échantillons en laboratoire comprenant
- au moins un dispositif piston-cylindre (59, 60),
- un dispositif de transformation et/ou de transmission (42, 45) de mouvements de rotation, dont la sortie est raccordée au dispositif piston-cylindre (59, 60), afin d'entraîner celui-ci,
- un dispositif d'accouplement (49) pour l'assemblage détachable avec un dispositif d'entraînement en rotation (78) d'un support d'outil (66) d'un automate de laboratoire, le dispositif d'accouplement (49) étant couplé avec l'entraînement du dispositif de transformation et/ou de transmission (42, 45) afin d'entraîner celui-ci,
- un dispositif de fixation (35, 36) pour la fixation de manière détachable de l'outil de dosage (52) sur le support d'outil (66) de l'automate de laboratoire lorsque le dispositif d'accouplement (49) est raccordé au dispositif d'entraînement (78) du support d'outil (66) et
- un dispositif d'indication (50) de la position du piston (59) du dispositif piston-cylindre (59, 60) qui peut être exploré par un capteur (84) du support d'outil (66) lors de la fixation de l'outil de dosage (52) sur le support d'outil.

18. Outil de dosage selon la revendication 17, dans lequel le dispositif de transformation et/ou de transmission (42, 45) présente un écrou fileté (42) bloqué en rotation, pouvant se déplacer axialement, influant avec une face terminale sur le piston du dispositif piston-cylindre et une tige (45) pouvant être vissée dans l'écrou fileté, raccordée au dispositif d'accouplement de manière résistante en rotation.

19. Outil de dosage selon la revendication 18, dans lequel le dispositif d'indication (50) est un goujon raccordé de manière fixe à l'écrou fileté (42).

20. Outil de dosage selon l'une des revendications 17 à 19, dans lequel le dispositif d'accouplement est un toc d'entraînement (49) raccordé de manière résistante en rotation à l'entraînement du dispositif de transformation et/ou de transmission (42, 45) avec au moins une surface d'attaque pour un dispositif d'entraînement en rotation du support d'outil (66).

21. Outil de dosage selon l'une des revendications 17 à 20, dans lequel le dispositif de fixation (35, 36) présente un tenon de fixation creux (35) et le dispositif d'accouplement (49) est placé dans le tenon de fixation (35) ou dépasse de celui-ci et/ou le dispositif d'indication (50) est placé dans le tenon de fixation (35) ou dépasse de celui-ci.

22. Outil de dosage selon la revendication 21, dans lequel le tenon de fixation (35) présente à l'extérieur une pièce d'assemblage (36) d'un assemblage par retenue mécanique détachable.

23. Outil de dosage selon la revendication 22, dans lequel le tenon de fixation (35) présente une pièce de fermeture à baïonnette (36).

24. Outil de dosage selon l'une des revendications 21 à 23, dans lequel le tenon de fixation (35) a au moins une partie cylindrique (35', 35") et au moins une partie de base conique (35"').

25. Outil de dosage selon l'une des revendications 17 à 24, qui présente une puce avec des données de l'outil de dosage (52) pouvant être lues de l'extérieur.

26. Support d'outil pour un automate de laboratoire pour le traitement automatique d'échantillons en laboratoire, en particulier approprié pour supporter et mouvoir des outils de préhension (1) et des outils de dosage (52) selon l'une des revendications 1 à 23, comprenant
- un dispositif d'entraînement en rotation (78) pour l'entraînement au choix d'un outil de préhension ou d'un outil de dosage (1, 52),
- un autre dispositif d'accouplement (79) pour l'assemblage au choix du dispositif d'entraînement en rotation (78) avec un dispositif d'accouplement (49) d'un outil de préhension ou d'un outil de dosage (1, 52),
- un autre dispositif de fixation (70, 71) pour la fixation au choix du dispositif de fixation (35, 36) d'un outil de préhension ou d'un outil de dosage (1, 52) lorsque les dispositifs d'accouplement (49, 79) du support d'outil (66) et de l'outil de préhension (1) ou de l'outil de dosage (52) sont couplés l'un avec l'autre et
- un dispositif de commande pour la commande au choix des mouvements d'un outil de préhension (1) ou d'un outil de dosage (52).

27. Support d'outil selon la revendication 26, dans lequel l'autre dispositif d'accouplement (79) présente au moins une autre surface d'attaque pour la transmission d'un mouvement d'entraînement en rotation.

28. Support d'outil selon la revendication 26 ou 27, dans lequel le dispositif de fixation a un logement (70) pour un tenon de fixation (35) d'un outil de préhension ou d'un outil de dosage (1, 52) et l'autre dispositif d'accouplement (79) est assigné au logement (70) pour embrayer le dispositif d'accouplement (49) de l'outil de préhension ou de l'outil de dosage (1, 52) lorsque le tenon de fixation (35) est placé dans le logement (70).

29. Support d'outil selon la revendication 28, dans lequel est assigné au logement (70) une autre pièce d'assemblage à baïonnette (71) pour l'assemblage détachable avec une pièce d'assemblage à baïonnette (35, 36) du tenon de fixation (35) d'un organe de préhension ou de dosage (1, 52).

30. Support d'outil selon la revendication 29, dans lequel l'autre pièce d'assemblage à baïonnette (71) peut être entraînée par moteur et le dispositif de commande commande le mouvement de l'autre pièce d'assemblage à baïonnette (71).

31. Support d'outil selon l'une des revendications 26 à 30, dans lequel un capteur (84) est assigné au logement (70) pour explorer un dispositif d'indication (50) d'un outil de préhension ou d'un outil de dosage (1, 52) placé avec le tenon de fixation (35) dans le logement (70) et le capteur est raccordé au dispositif de commande pour commander les mouvements selon la position des dispositifs de préhension (9, 10) ou du piston (60).

32. Support d'outil selon l'une des revendications 26 à 31, qui présente un autre capteur (86) pour explorer des données d'un outil de préhension ou d'un outil de dosage (1, 52) et qui est raccordé à la commande pour commander les mouvements selon les données de l'outil de préhension (1) ou de l'outil de dosage (52) respectivement utilisé.

33. Support d'outil selon l'une des revendications 26 à 32 avec un dispositif de déplacement pour le déplacement du support d'outil le long au moins d'un et/ou autour au moins d'un axe spatial, ledit déplacement pouvant être commandé par le dispositif de commande afin d'obtenir avec l'outil de préhension (1) différentes positions de récipient et avec l'outil de dosage (52) différentes positions de dosage.

34. Système pour la préhension et le déplacement de récipients et/ou le dosage d'échantillons avec un outil de préhension (1) selon l'une des revendications 1 à 16 et/ou un outil de dosage (52) selon l'une des revendications 17 à 25 et un support d'outil (66) selon l'une des revendications 26 à 33.
